Europäisches Patentamt

European Patent Office

Office européen des brevets

(19)

(11) Veröffentlichungsnummer: **0 0 1 7 729**
**B1**

(12) # EUROPÄISCHE PATENTSCHRIFT

(45) Veröffentlichungstag der Patentschrift:
08.12.82

(21) Anmeldenummer: 80100844.2

(22) Anmeldetag: 21.02.80

(51) Int. Cl.³: **G 01 N 27/12**

(54) **Sauerstoffmesssonde.**

(30) Priorität: 21.04.79 DE 2916178

(43) Veröffentlichungstag der Anmeldung:
29.10.80 Patentblatt 80/22

(45) Bekanntmachung des Hinweises auf die Patenterteilung:
08.12.82 Patentblatt 82/49

(84) Benannte Vertragsstaaten:
AT BE CH FR GB IT NL SE

(56) Entgegenhaltungen:
DE-A-2 733 906
GB-A-1 231 138
US-A-2 207 868
US-A-3 340 014
US-A-4 001 758
US-A-4 125 374

(73) Patentinhaber: DORNIER SYSTEM GmbH,
Postfach 1360, D-7990 Friedrichshafen (DE)

(72) Erfinder: Schmidberger, Rainer, Dr. Dipl.-Phys.,
Reussenbachstrasse 33, D-7778 Markdorf (DE)

(74) Vertreter: Landsmann, Ralf, Dipl.-Ing., Kleeweg 3,
D-7990 Friedrichshafen 1 (DE)

## Sauerstoffmeßsonde

Die Erfindung betrifft eine Sonde zur Messung des Sauerstoffgehalts von Verbrennungsabgasen.

Der optimale Betrieb von Verbrennungs- oder Feuerungsanlagen ist unter zwei Gesichtspunkten zu betrachten:

— Brennstoffverwertung
— Schadstoffemission.

Zur Einhaltung der gesetzlichen Bestimmungen über die maximale Schadstoffemission und zur gleichzeitigen maximalen Brennstoffverwertung müssen Brenner mit Luftüberschuß zwischen 5% und 40% (Luftzahl $\lambda = 1,05-1,4$) betrieben werden, wobei der optimale Wert jeweils von der Bauart von Brenner und Kessel abhängt.

Der Luftüberschuß sollte jedoch nicht höher sein als für eine vollständige Verbrennung unbedingt notwendig ist, da bei steigendem Luftüberschuß zwar die Schadstoffemission verringert wird, gleichzeitig jedoch der Kesselwirkungsgrad sinkt, da eine größere Menge Ballastluft erwärmt und über den Kamin abgeführt wird.

Der Sauerstoffpartialdruck im Abgas wird durch den Luftüberschuß bei der Verbrennung bestimmt. Je höher der Luftüberschuß im Vergleich zu der für eine vollständige Verbrennung notwendigen Luftmenge ist, umso größer ist der Sauerstoffpartialdruck im Abgas.

Durch Messung des Sauerstoffpartialdrucks im Abgas ist demnach die Überwachung des Luftüberschusses bei der Verbrennung für Kontroll- und Regelzwecke der Feuerungsanlage möglich.

Dieses Prinzip wird bereits für verschiedene Anwendungen ausgenutzt, wobei insbesondere für die Überwachung der Schadstoffemission von Verbrennungsmotoren Meßsonden zur Messung des Sauerstoffpartialdrucks im Abgas von Kraftfahrzeugen entwickelt wurden.

Die im Kraftfahrzeug eingesetzten Abgasmeßsonden dienen dazu, mit Hilfe eines geschlossenen Regelkreises den Wert $\lambda = 1$ zu stabilisieren, da bei stöchiometrischem Luft/Brennstoffverhältnis mit Hilfe eines nachgeschalteten Katalysators eine nahezu vollständige Umsetzung der Schadstoffe möglich ist. Im thermodynamischen Gleichgewicht ändert sich der Sauerstoffpartialdruck im Abgas für $\lambda = 1$ sprungartig um mehrere Zehnerpotenzen. Der zugehörige Sprung in der Meßsonde ermöglicht eine relativ einfache elektronische Regelung des Luft/Brennstoffverhältnisses auf den Wert $\lambda = 1$.

Da bei Heizungsanlagen eine katalytische Nachreaktion des Abgases erfolgt, muß die Verbrennung bei einer Luftzahl $\lambda > 1$ erfolgen, um minimale Schadstoffemission zu erhalten.

Diese Zusammenhänge sind aus verschiedenen Literaturstellen bekannt. R. Zechnall und G.

Baumann geben in der Motortechnischen Zeitschrift 34 (1973) 1, S. 7, einen Überblick über die Abgasreinigung bei Ottomotoren durch geschlossenen Regelkreis. Als Meßwertgeber wird eine sogenannte $\lambda$-Sonde im Abgas verwendet, die eine vom Sauerstoffpartialdruck im Abgas abhängige Spannung als Meßgröße erzeugt. Das Funktionsprinzip einer derartigen Sonde beruht auf dem Vergleich der Sauerstoffpartialdrucke im Abgas und in der umgebenden Luft mit Hilfe eines Sauerstoffionen-leitenden Feststoffelektrolyten (Zirkondioxid), der die beiden Gasräume voneinander trennt und mit Elektroden versehen ist. Zwischen den Elektroden baut sich eine sogenannte Nernst-Spannung auf, die vom Verhältnis der Sauerstoffpartialdrucke zu beiden Seiten sowie von der Temperatur der Meßsonde abhängt. Die Ausgangsspannung einer derartigen Zirkondioxidsonde weist einen starken Sprung für den Wert $\lambda = 1$ auf, während für $\lambda < 1$ und $\lambda > 1$ eine sehr flache Abhängigkeit vom Sauerstoffpartialdruck vorliegt.

Ein anderes Meßprinzip zur Erfassung des Sauerstoffpartialdrucks im Abgas von Kraftfahrzeugen wird beschrieben von Tien, Stadler, Gibbons und Zacmanidis in Ceramic Bulletin Vol. 54, Nr. 3 (1975) S. 280. Hier wird die quasikontinuierliche Sauerstoffabgabe von $TiO_2$ in Abhängigkeit vom Sauerstoffpartialdruck in der umgebenden Gasatmosphäre für die Messung des Sauerstoffpartialdrucks verwendet. Durch die Abgabe von Sauerstoff ändert sich die elektrische Leitfähigkeit von Titandioxid kontinuierlich. Der Widerstandsverlauf eines derartigen Sensors in Abhängigkeit von der Luftzahl $\lambda$ weist einen ähnlichen Verlauf auf wie die Spannung einer EMK-Sonde. Insbesondere ist die Abhängigkeit des Widerstandes vom Sauerstoffpartialdruck für $\lambda > 1$ sehr gering.

Ein ähnlicher Sensor wird beschrieben in der US-A-1 467 735.

Auch zur Messung des Sauerstoffpartialdrucks in Rauchgas- und Feuerungsanlagen werden ähnliche Sonden wie in Kraftfahrzeugen eingesetzt. Die DE-B-2 400 246 beschreibt eine Anordnung zur Messung des Sauerstoffgehalts in Rauchgaskanälen, wobei eine Festelektrolytzelle aus Zirkonoxid im Abgasstrom angeordnet ist und als Vergleichsgas Luft zugeführt wird. Um mit einer derartigen Sonde den Sauerstoffpartialdruck messen zu können, muß die Sonde temperaturstabilisiert werden. Dies geschieht in der oben genannten DE-B-Druckschrift mit Hilfe einer um die Sonde gewickelten Heizspirale. Die Auswertung und Weiterverarbeitung des Meßsignals einer derartigen Sonde ist aus dem oben genannten Grund der sehr flachen Sauerstoffpartialdruckabhängigkeit des Meßsignals schwierig. Die DE-A 2 510 189 beschreibt die Verwendung einer Zirkonoxidmeßsonde im Rauchgas einer Feuerungsanlage zur direkten Brennersteuerung, d. h. zur Regelung des Luft-Brennstoff-Verhältnisses. Anlagen dieser Art werden in der Praxis bereits eingesetzt, wobei jedoch ihre Anwendung auf Großfeuerungsanlagen beschränkt ist, da die Kosten einer solchen Brennersteuerung mit Zirkonoxidmeßzellen sehr hoch sind. Die hohen Kosten sind eine Folge der flachen Sauerstoffpartialdruckabhängigkeit des Meßsignals, die einen großen elektronischen Aufwand erforderlich macht, um das Brennstoff-Luft-Verhältnis innerhalb eines engen $\lambda$-Bereichs auf $\lambda$-Werte > 1 zu stabilisieren.

Um diese Schwierigkeiten zu umgehen, wurden neuerdings Versuche unternommen, die Sauerstoffpartialdruckabhängigkeit im interessierenden $\lambda$-Bereich dadurch zu erhöhen, daß dem zu messenden Abgas ein Hilfsgas (Wasserstoff) beigemischt wird, das im thermodynamischen Gleichgewicht dafür sorgt, daß der Sauerstoffpartialdrucksprung, der üblicherweise bei $\lambda = 1$ erfolgt, bei Werten von $\lambda > 1$ auftritt. Der $\lambda$-Wert, bei dem dieser Sprung erfolgt, hängt vom Verhältnis des Abgasteilstromes zum Hilfsgasteilstrom ab. Bei dieser Anordnung wird allerdings lediglich eine Verlagerung der Problematik erreicht, indem die Konstanthaltung des Luft-Brennstoffverhältnisses am Brennereingang auf die Problematik der Konstanthaltung von Abgasteilstrom und Hilfsgasteilstrom umgesetzt wird.

Auf einem anderen technischen Gebiet, nämlich der Messung des Wasserstoffanteils in Gasen, ist ein Sensor bekannt (GB-A 1 231 138), der den Widerstandssprung eines Metalloxids bei der Umwandlung in das zugehörige Metall ausnutzt. Der Sensor besitzt in einer Ausführung einen sensitiven Film aus PdO, der beim Vorhandensein von Wasserstoff zu Pd reduziert wird. Der Sensor registriert Wasserstoffanteile im Prozentbereich und dient zur Überwachung von Raumatmosphären auf Entflammbarkeit. Der Sauerstoffgehalt der Meßatmosphäre kann vom Detektor nicht registriert werden. Zur Messung von Verbrennungsabgasen ist der Sensor nicht geeignet.

Eine Sonde zur Ermittlung des stöchiometrischen Punktes $\lambda = 1$ in Verbrennungsabgasen ist beispielsweise aus der US-A 3 340 014 bekannt.

Dabei wird eine Sonde mit einem den Abgasen ausgesetzten Fühlelement verwendet, das aus einem Material besteht, das durch eine Änderung des Sauerstoffgehalts in reversibler Weise vom metallischen in den oxidierten Zustand überführbar ist und dabei eine sprunghafte Änderung seines elektrischen Leitwerts erfährt. Die dort beschriebenen Materialkombinationen zeigen den Effekt jedoch nur bei den sprunghaften Änderungen des Sauerstoffgehalts um mehrere Zehnerpotenzen beim Überschreiten des Punktes $\lambda = 1$.

Die aus der Messung resultierende Aussage lautet: die Verbrennung verläuft mit Luftüberschuß ($\lambda > 1$) oder mit Luftmangel ($\lambda < 1$), wobei dem Meßergebnis nicht zu entnehmen ist, wie groß der jeweilige Überschuß oder Mangel ist. Mit diesem Sensor ist mithin eine quantitative Messung des Sauerstoffpartialdrucks für $\lambda > 1$ nicht möglich. Es besteht jedoch ein Bedarf an Meßgeräten, die quantitativ den Luftüberschuß registrieren können.

Um einen breiten Einsatz von Überwachungs- und Regelungsanlagen auch im Haushalts-Feuerungsbereich zu erreichen, müssen einfache und billige Meßsysteme entwickelt werden, die weder Referenz- noch Hilfsgase benötigen und deren Ausgangssignal im interessierenden $\lambda$-Bereich eine starke Abhängigkeit vom Sauerstoffpartialdruck aufweist.

Der Erfindung liegt die Aufgabe zugrunde, eine Sauerstoffmeßsonde zu entwickeln, die im Sauerstoffpartialdruckbereich zwischen 0,01 und 0,08 bar (dies entspricht einem $\lambda$-Bereich von 1,05 – 1,4) eine starke Sauerstoffpartialdruckabhängigkeit des Meßsignals aufweist, deren Funktionsfähigkeit vom Hilfs- oder Referenzgas unabhängig ist und deren Herstellungskosten so niedrig sind, daß eine breite Verwendung auch im Haushaltsbereich möglich ist.

Die Aufgabe wurde erfindungsgemäß gelöst durch Schaffung einer Sauerstoffmeßsonde, die die in Anspruch 1 genannten Merkmale besitzt.

Der Erfindung liegt die Erkenntnis zugrunde, daß das Metall-Metalloxidsystem Palladium-Palladiumoxid (Pd – PdO) die geforderten Eigenschaften für die Verwendung als Fühlelement in dem interessierenden Sauerstoffpartialdruckbereich besitzt. Die Umwandlung Metall-Metalloxid erfolgt bei Palladium in einem Temperaturbereich zwischen 650 und 850°C für den Luftzahlbereich $\lambda = 1,05 – 1,4$.

Die Erfindung wird anhand von drei Figuren näher erläutert.

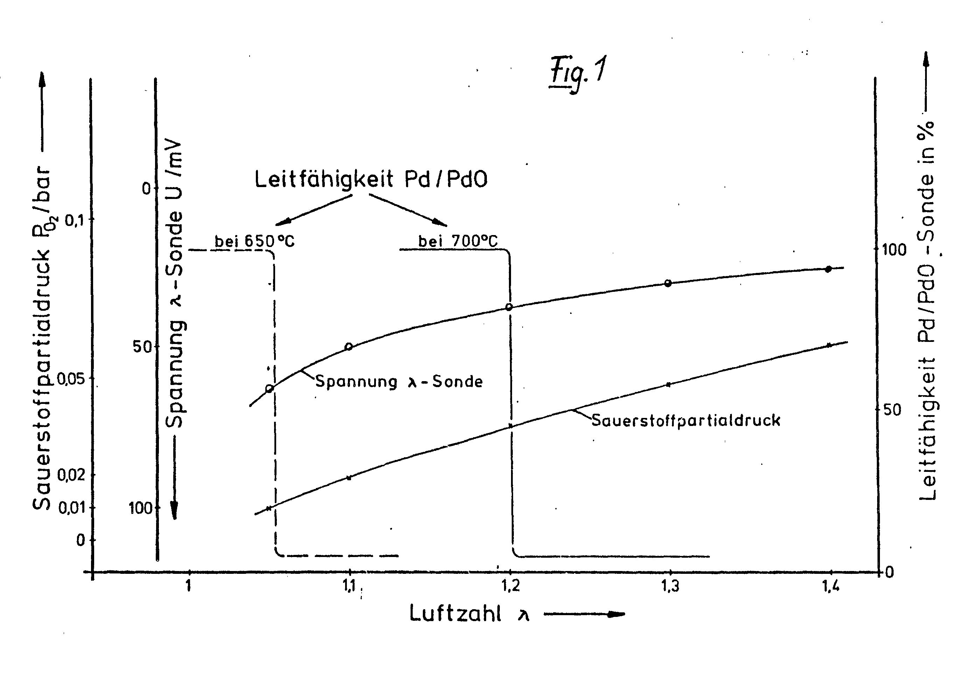

In Fig. 1 ist schematisch der Verlauf des Meßsignals einer erfindungsgemäßen Pd/PdO-Sonde in Abhängigkeit von der Luftzahl $\lambda$ im Vergleich zum Meßsignal einer EMK-Meßsonde dargestellt. Die Leitfähigkeit der Palladiumsonde ändert sich am Sprungpunkt um einen Faktor 20. Um die Ansprechgeschwindigkeit einer Palladium-Palladiumoxidsonde möglichst groß zu machen, muß das Verhältnis von Oberfläche zu Volumen des aktiven Palladiums möglichst groß sein. Dies ist insbesondere im Interesse eines schnellen Oxidationsverlaufes von Bedeutung, da die Oxidation durch schützende Passivschichten stark verlangsamt wird. Die Temperaturabhängigkeit des Sauerstoffpartialdrucks von Palladiumoxid ist relativ stark. Dies bedeutet, daß die Temperatur des Fühlelements innerhalb relativ enger Grenzen stabilisiert werden muß. Eine Temperaturänderung um 8° entspricht einer Verschiebung der Luftzahl um 0,01.

Die erfindungsgemäße Sauerstoffmeßsonde weist gegenüber den zum Stand der Technik gehörenden EMK-Meßsonden oder Titandioxidmeßsonden eine Reihe von Vorteilen bei der Verwendung in Feuerungsanlagen auf.

Die erfindungsgemäßen Sonden benötigen kein Referenz- oder Hilfsgas wie die EMK-Meßsonden auf Zirkonoxidbasis, bei denen die Abdichtung zwischen Abgas und Referenzgas ein technisches Problem darstellt. Ein weiterer Vorteil der erfindungsgemäßen Sonde ist der sprungartige Verlauf der Meßgröße bei einem definierten Sauerstoffpartialdruck, wobei der Sauerstoffpartialdruck, bei dem der Leitfähigkeitssprung erfolgt, lediglich von der Temperatur der Meßsonde bestimmt wird. Daraus ergibt sich, daß die Sonde zur Regelung auf beliebige $\lambda$-Werte geeignet ist, wenn die Sondentemperatur über eine Temperaturstabilisierung vorgegeben werden kann. Damit ist die Meßsonde an die jeweiligen Anforderungen von Feuerungsanlagen anpaßbar.

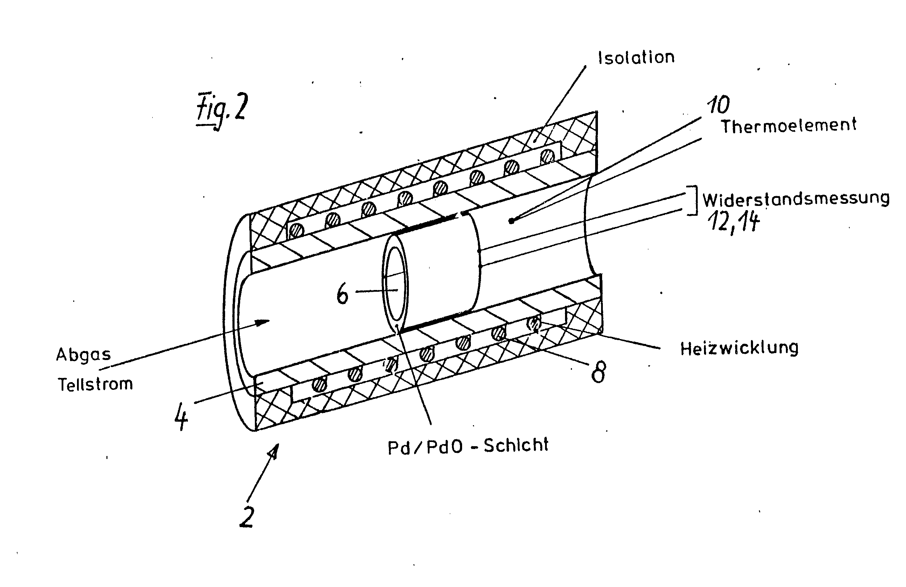

Fig. 2 zeigt eine mögliche technische Ausführungsform der erfindungsgemäßen Sonde. Eine Sonde 2 besteht aus einem keramischen Trägerrohr 4 von ca. 5 cm Länge, ca. 8 mm Außendurchmesser und ca. 5 mm Innendurchmesser. Eine aktive Palladiumschicht 6 befindet sich als Fühlelement auf der Innenseite des Keramikröhrchens mit mittleren Bereich über eine Länge von 5 mm, auf der Außenseite des Röhrchens 4 ist eine Heizwicklung 8 angeordnet, wobei die Temperatur des Fühlelements durch ein Thermoelement 10 gemessen wird. Die Heizwicklung 8 dient dazu, die Temperatur des Fühlelements auf einem Wert zu stabilisieren, dessen Höhe durch den einzuhaltenden Luftüberschuß gegeben ist. Beispielsweise 700° C für eine Luftzahl $\lambda = 1,2$, wie Fig. 1 zu entnehmen ist. In das Innere des Röhrchens wird ein Abgasteilstrom eingeführt, dessen Größe so bemessen ist, daß eine Abkühlung des Fühlelements durch den Abgasstrom nicht erfolgt. Die Widerstandsmessung des Fühlelements erfolgt über Elektroden 12, 14, die in axialer Richtung herangeführt sind.

Das Fühlelement besteht aus Palladium zusammen mit einer keramischen Komponente. Die keramische Komponente dient dazu, die poröse Struktur des Palladiums zu erhalten und damit zur Vergrößerung der spezifischen Oberfläche der aktiven Schichten beizutragen. Vorteilhaft ist die Verwendung einer keramischen Komponente aus einem mischleitfähigen Material, d. h. einem gemischten Sauerstoffionen- und Elektronenleiter. Diese Materialien beschleunigen aufgrund ihrer hohen Sauerstoffdurchlässigkeit den Sauerstoffaustausch zwischen aktivem Sondenmaterial und Gasatmosphäre. Als mischleitfähige Keramik kann beispielsweise Ceroxid verwendet werden, das durch Zusatz von 0,5 Vol.-% Niob-Oxid elektronisch leitfähig gemacht wird.

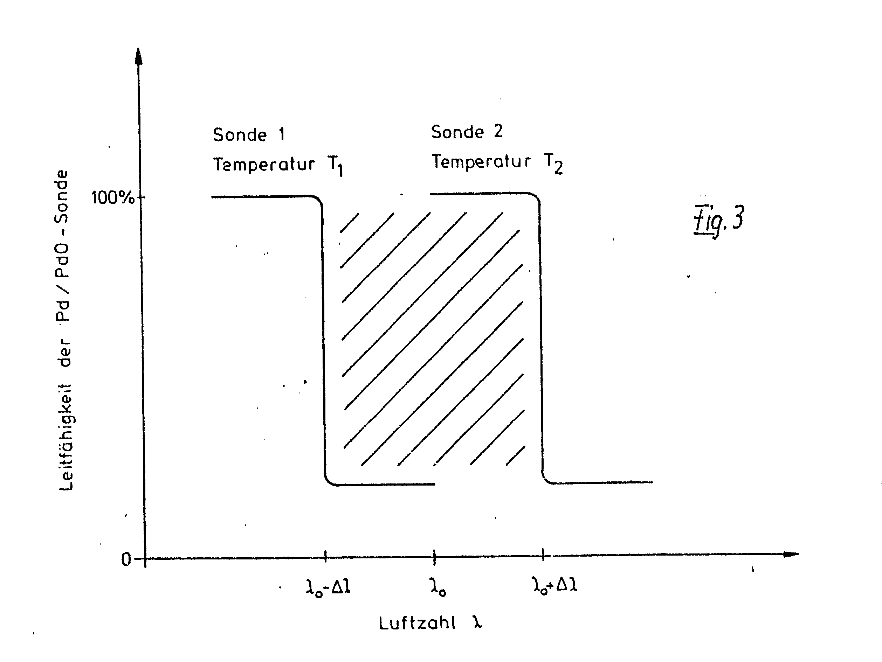

Fig. 3 zeigt die Möglichkeit, mit Hilfe zweier Sonden die Luftzahl $\lambda$ auf einem Wert $\lambda_0 \pm \Delta\lambda$ zu stabilisieren. Die Temperatur $T_1$ der ersten Sonde ist so eingestellt, daß die Sauerstoffabgabe bei einem Wert $\lambda_0 - \Delta\lambda$ erfolgt, während die Temperatur $T_2$ der Sonde 2 so eingestellt ist, daß die Sauerstoffabgabe bei einer Luftzahl $\lambda_0 + \Delta\lambda$ erfolgt. Auf diese Weise ist der Bereich $\lambda_0 \pm \Delta\lambda$ eindeutig durch den Zustand der beiden Sonden definiert. Im Regelbereich (schraffiert) ist die erste Sonde oxidiert und die zweite Sonde reduziert. Außerhalb des Regelbereichs sind entweder beide Sonden oxidiert oder reduziert.

## Patentansprüche

1. Sonde zur Messung des Sauerstoffgehalts von Verbrennungsabgasen mit einem den Abgasen ausgesetzten Fühlelement (6) aus einem Material, das durch eine Änderung des Sauerstoffgehalts in reversibler Weise vom metallischen in den oxidierten Zustand überführbar ist und dabei eine sprunghafte Änderung seines elektrischen Leitwerts erfährt, dadurch gekennzeichnet, daß ein Material verwendet wird, das bei einer Änderung des Sauerstoffgehalts innerhalb des Sauerstoffpartialdruckbereichs von 0,01 bis 0,08 bar und innerhalb eines Temperaturbereichs von 650 bis 850° C in reversibler Weise vom metallischen in den oxidierten Zustand überführbar ist, und daß eine Heizeinrichtung (8) für das Fühlelement (6) vorgesehen ist, mittels der die Temperatur des Fühlelements auf einen Wert innerhalb des genannten Temperaturbereichs einstellbar ist.

2. Sonde nach Anspruch 1, dadurch gekennzeichnet, daß als Metall-Metalloxidsystem Palladium-Palladiumoxid (Pd/PdO) verwendet wird.

3. Sonde nach Anspruch 1 oder 2, dadurch gekennzeichnet, daß dem Material eine keramische Komponente beigefügt ist.

4. Sonde nach Anspruch 3, dadurch gekennzeichnet, daß die keramische Komponente aus Ceroxid besteht, das mit 0,5 – 10 Vol.-% $Nb_2O_5$ oder $Ta_2O_5$ dotiert ist.

5. Sonde nach einem der vorhergehenden Ansprüche, dadurch gekennzeichnet, daß ein weiteres Fühlelement der im Anspruch 1 definierten Art vorgesehen und mit einer weiteren Heizeinrichtung ausgestattet ist, wobei die Temperatur des einen Fühlelements so eingestellt ist, daß der Oxidations- bzw. Reduktionsvorgang dieses Elements unterhalb eines vorgegebenen Sauerstoffpartialdrucks innerhalb des genannten Partialdruckbereichs auftritt, und daß die Temperatur des weiteren Fühlelements so eingestellt ist, daß der Oxidations- bzw. Reduktionsvorgang dieses Elements oberhalb des vorgegebenen Partialdrucks und ebenfalls innerhalb des genannten Partialdruckbereichs auftritt.

6. Vorrichtung nach Anspruch 5, dadurch gekennzeichnet, daß die beiden Fühlelemente sich in einem gemeinsamen Trägerrohr befinden und in axialer Richtung hintereinander angeordnet sind, wobei die Temperaturen der beiden Fühlelemente jeweils getrennt gemessen und mit Hilfe getrennter Heizwicklungen stabilisiert werden.

## Claims

1. Sensor for measuring the concentration of oxygen in exhaust gases with a sensing element (6) exposed to the exhaust gases, the sensing element (6) consisting of a material convertible reversibly from the metallic state to the oxide state by a change of the concentration of oxygen, said conversion causing an sudden change in electrical conductivity, comprising a material, convertible reversibly from the metallic state to the oxide state by a change of the concentration of oxygen at the partial pressure interval from 0,01 to 0,08 bar and at the temperatur interval from 650 to 850° C, comprising heating means for adjusting the temperature of the sensing element to a predetermined value within said temperature interval.

2. A sensor according to claim 1, wherein said metal-metal oxide comprises palladium-palladium oxide.

3. A sensor according to claims 1 — 2, wherein said material further comprises a ceramic component.

4. A sensor according to claim 3, wherein said ceramic component comprises cerium dioxide, doped with 0,5 — 10% by volume of $Nb_2O_5$ or $Ta_2O_5$.

5. Sensor as claimed in any one of the preceding claims, comprising a further sensing element from the typs defined in claim 1 and a further heating means, wherby the temperature of one of the sensing elements is adjusted to a value at which the oxidation respectively reduction of this elements occurs below a predetermined partial pressure of oxygen within the said partial pressure interval; the temperature of the further sensing element is adjusted to a value at which the oxidation respectively reduction of this element occurs above the predermined partial pressure of oxygen and also within the said partial pressure interval.

6. Apparatus according to claim 5, wherein both sensing elements are mounted in axial direction one after another in a common supporting pipe whereby the temperatures of the both sensing elements are measured seperately and stabilized by seperated heating coils.

## Revendications

1. Sonde pour mesurer la teneur en oxygène des gaz de combustion qui comporte un élément sensible (6) exposé à ces gaz et fait d'une matière qui, lors d'une variation de la teneur en oxygène peut être convertie, d'une manière réversible, de l'état métallique à l'état d'oxyde et qui ainsi, présente une variation brusque de sa conductibilité électrique, caractérisée en ce qu'on utilise une matière qui, lors d'une variation de la teneur en oxygène à l'intérieur des limites des pressions partielles d'oxygène comprises entre $10^3$ et $8. 10^3$ Pa et à l'intérieur d'un domaine de températures s'étendant de 650 à 850° C subit, d'une manière réversible, une transformation de l'état métallique à l'état d'oxyde, et en ce qu'un dispositif de chauffage (8) pour l'élément sensible (6) est prévu, au moyen duquel la température dudit élément sensible peut être réglée à une valeur située à l'intérieur du domaine de températures mentionné.

2. Sonde selon la revendication 1, caractérisée en ce que le système métal-oxyde métallique utilisé est le système Palladium-oxyde de Palladium (Pd/PdO).

3. Sonde selon la revendication 1 ou 2, caractérisé en ce qu'on incorpore dans la matière un composant de céramique.

4. Sonde selon la revendication 3, caractérisée en ce que le composant de céramique est un oxyde de cérium qui a été dopé avec 0,5 à 10% en volume de $Nb_2O_5$ ou de $Ta_2O_5$.

5. Sonde selon l'une quelconque des revendications précédentes, caractérisée en ce qu'un second élément sensible tel que spécifié dans la revendication 1 est prévu et est équipé d'un second dispositif de chauffage, la température de l'un des éléments sensibles étant réglée de façon que le processus d'oxydation ou de réduction de cet élément se fasse au-dessous d'une pression partielle d'oxygène donnée, à l'intérieur du domaine spécifié de pressions partielles, tandis que la température du second élément sensible est réglée de façon que le processus d'oxydation ou de réduction de cet élément se fasse au-dessus de la pression partielle donnée et également à l'intérieur du domaine spécifié de pressions partielles.

6. Dispositif selon la revendication 5, caractérisée en ce que les deux éléments sensibles sont logés dans un tube de support commun et sont disposés axialement l'un derrière l'autre, les températures des deux éléments sensibles étant mesurées séparément et stabilisées à l'aide d'enroulements de chauffage séparés.

_Fig.1_

_Fig. 2_

Isolation

10 Thermoelement

Widerstandsmessung
12, 14

Abgas
Teilstrom

4

6

Heizwicklung

8

2

Pd/PdO - Schicht

0 017 729

Sonde 1
Temperatur $T_1$

Sonde 2
Temperatur $T_2$

*Fig.3*

100%

Leitfähigkeit der ·Pd / PdO - Sonde

0

$\lambda_o - \Delta\lambda$     $\lambda_o$     $\lambda_o + \Delta\lambda$

Luftzahl $\lambda$